# EUROPEAN PATENT SPECIFICATION

(11) **EP 0 393 955 B1**
(45) Date of publication and mention of the grant of the patent: **15.03.1995**
(21) Application number: 90304037.6
(22) Date of filing: 12.04.1990
(51) Int. Cl.: G11B 27/34, H04N 5/782

(54) **Video recording apparatus**
Videoaufzeichnungsgerät
Appareil d'enregistrement vidéo

(30) Priority: 19.04.1989 JP 99211/89
(43) Date of publication of application: 24.10.1990
(73) Proprietor: SONY CORPORATION, Tokyo 141 (JP)
(72) Inventor: Akiguchi, Hisayuki, c/o Patents Division, Shinagawa-ku, Tokyo 141 (JP); Wakahara, Tatsuya, c/o Patents Division, Shinagawa-ku, Tokyo 141 (JP); Kuwabara, Hiroshi, c/o Patents Division, Shinagawa-ku, Tokyo 141 (JP); Shimada, Keiichiro, c/o Patents Division, Shinagawa-ku, Tokyo 141 (JP); Kunigita, Hisayuki, c/o Patents Division, Shinagawa-ku, Tokyo 141 (JP); Kawano, Masatoshi, c/o Patents Division, Shinagawa-ku, Tokyo 141 (JP)
(74) Representative: Thomas, Christopher Hugo

(56) References cited:
- EP-A- 0 081 958
- EP-A- 0 291 934
- DE-C- 3 742 468
- US-A- 4 626 909
- US-A- 4 734 791

## Description

This invention relates to video recording apparatus such as a video tape recorder (VTR) (also known as a video cassette recorder) and, in particular, to the identifying of programme information for programmes recorded on a tape cassette.

Recently, it has become more and more customary to record, for example, television programmes on a domestic cassette-type VTR, for subsequent viewing. The standard recording time for ordinary domestic video cassette tapes is about two hours, and this recording time may be extended using longer play modes to record up to six hours. Thus, it frequently occurs that several programmes are recorded on the same cassette, and playing a desired programme involves a time-consuming and laborious manual search operation consisting of repeatedly fast forwarding and playing and/or rewinding and playing to find the required programme. Similar problems arise when a programme is to be recorded onto a tape following the end of a previously recorded programme.

It has been the customary to enter the data, such as the title of the recorded programme and/or the tape position as indicated by the tape counter, on a label affixed to the cassette housing or on a separate card, as an aid to programme searching.

However, when search data are entered on a label or the like, the relationship between the recorded programme and the tape position cannot be intuitively grasped. When the tape counter value indicated on the VTR is entered as tape position data, the counter value may differ from the entered value for other VTRs, and so the searching cannot be performed effectively. Furthermore, the use of the tape counter data requires that the tape counter be reset at some known position for each tape, such as the beginning of the tape, thereby requiring rewinding of each tape to the beginning. The tape counter must also be closely monitored during the search operation to stop the tape at the desired counter setting.

In our Japanese published application 58/6853 we have proposed a cassette comprising a label having a display section for determining the recorded contents of the cassette tape, and having at least one side of a length corresponding to the recording time duration for the cassette, and a label mounting section provided with time graduations, whereby the recording position and duration of the recorded contents may be intuitively and accurately understood.

It is generally known that video cassette tapes may be roughly grouped into two types depending upon how they are used in the VTR. The first type of cassette is one in which the recorded contents are not erased but are preserved for a relatively long time, and the second type is one in which the recording is of a temporary nature for time-shift viewing.

Although the above-described data entry or labelling process for programme searching may be more or less effective with the first type of cassette, it is not convenient with the second type since it is necessary to erase and rewrite the entry data or to re-affix labels for each recording. This bothersome task is frequently neglected, leaving the tapes with no recording data, or worse, with erroneous recording data from now erased programmes.

German patent no DE-C-3742468 discloses a video recording device with a programme request memory for storage of programme data, such as transmission date, time and channel, entered by an operator in advance of programme transmission whereby the requested programme is automatically recorded at the time of transmission. At the time of recording, the starting position of the programme on the video tape is detected and this tape position is transferred to the programme request memory. The content of the programme request memory can be displayed by an operator to determine the position of a recorded programme and can then be erased.

According to the present invention there is provided apparatus for recording video signals corresponding to a plurality of programmes onto a magnetic tape of a tape cassette having cassette identity information thereon, the apparatus comprising:
recording means for recording the video signals on the magnetic tape of the tape cassette;
cassette identification means for detecting the cassette identity information from the cassette;
a memory for storing the cassette identity information and programme identification information relating to programmes recorded on the cassette, the programme identification information comprising at least position information indicating the position of the programme on the magnetic tape and further information relating to the programme;
display means for displaying the cassette identity information and the programme identification information; and
control means for controlling the recording means, the cassette identification means, the memory and the display means, the control means being arranged to supply said programme identification information to the memory on recording of a programme for subsequent display with the cassette identity information by the display means.

An embodiment of the present invention may provide a cassette type recording device for recording a programme, such as a television broadcast programme, on a recording medium enclosed in a cassette, such as a video cassette. The device also includes a memory forming a data storage means in which at least the data concerning the programme to be recorded is recorded at the time of programme recording. This data, includes position information indicating the position of the recorded programme on the tape, and further information which may include such things as the recording date, the day of the week, the recording start time and finish time, and the channel from which the programme has been recorded. The cassette identity data, is also stored in the memory.

The embodiment may include a storage means, such as a random access memory (RAM), in which a variety of programme searching data are stored. It is thereby easy to rewrite, rearrange, display, or automatically search the data in such storage means.

In addition, data from various data generators, such as record times indicators, recording position detection means or cassette identification means, may be automatically transferred to and stored in the storage means during recording of the programme, so that data entry operations may be conveniently dispensed with.

By displaying data from the data storage means, it is easily possible to ascertain which programme has been recorded on which portions of the cassette. This is applicable to all types of cassette tapes.

The invention will now be described by way of example with reference to the accompanying drawings, throughout which like parts are referred to by like references, and in which:
Figure 1 is a functional block diagram of an embodiment of a cassette type recording device according to the present invention as applied to a VTR;
Figure 2 is a perspective view of a tape cassette employed in the embodiment of Figure 1;
Figure 3 is a flow chart illustrating the operation of an embodiment of the present invention;
Figure 4 shows a display format for search data; and
Figure 5 shows another example of a display format.

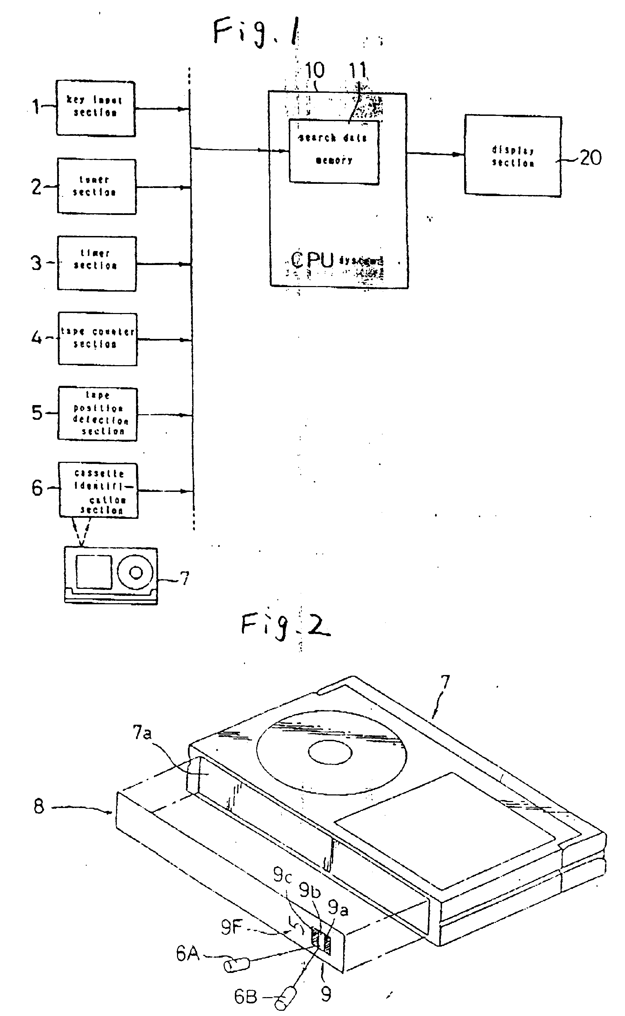

In the embodiment of Figure 1 a VTR for recording a video programme, such as a television broadcast programme, onto a video cassette tape for personal entertainment is provided with a search data memory 11, such as a random access memory (RAM). The memory 11 is provided within a central processing unit (CPU) system 10 comprising a microprocessor. During recording of the television programme, search data concerning the programme to be recorded are recorded in the memory 11. Such search data can include data on the television broadcast programme, the tape position which indicates the position of the programme on the video tape, and identification data of the video tape cassette loaded in the VTR. The data concerning the programme may include the month, day of the month, day of the week, and programme start and finish times, as well as the channel from which the programme was recorded. It is of course possible to record non-broadcast television signals, such as cable programming, as well.

The above-described tape position data may be computed on the basis of the values of the reel hub radii and tape thickness as a function of the tape cassette type (that is the playing or recording time duration of the cassette), the revolutions per minute of the supply reel, or the revolutions per minute of the take-up reel. The tape position data are arranged for displaying the absolute position of the recorded programme from the beginning of the tape. The cassette identification data are used to identify the cassette when a plurality of cassettes are used.

As shown in Figure 1, the various search data may be obtained from, for example, a key input section 1, a tuner section 2, a timer section 3, a tape counter section 4, a tape position detection section 5, and a cassette identification section 6. In the memory 11, there are supplied various key input data such as memoranda concerning a programme or command data for the cassette type, that is the recording or playback time duration of the cassette, from the key input section 1. Also supplied to the memory 11 are the television broadcast stations selecting data from the tuner section 2; the data concerning the recording start and finish times corresponding to the television broadcast programme start and finish time from the time section 3; tape count data obtained from counting detection pulses of the rotation of a reel drive block from the tape counter section 4; tape absolute position data computed on the basis of, for example, the cassette type that is the recording or playback time duration of the tape cassette or the rpm ratio of the supply reel to the take-up reel, from the tape position detection section; and identification data of a cassette 7 loaded in the VTR from the cassette identification section 6.

The cassette 7 is identified by the cassette identification section 6 by, for example, previously entering a read-out mark on a label 8 stuck on a rear surface 7a of the cassette 7, as shown in Figure 2. A mark 9 is read out by, for example, optical read-out means within the VTR. As specific examples of the mark, it is contemplated to provide markings indicating identification numerals in a binary form in marking frames 9a, 9b and 9c for a plurality of bits. In the present example, three such bits are provided. More specifically, the marking frames 9a, 9b and 9c are made to correspond to units "1", "2", and "4" of the binary figures, with the black-tinted frames being "1", for representing binary "000" to "111" (0 to 7 in the decimal system). A larger number may also be expressed by increasing the number of frames.

The cassette identification section 6 is provided with optical read-out means consisting of a light emitting device 6a, such as a light emitting diode, and a light receiving device 6b, such as a photodiode. The binary numeral of the mark 9 is optically read by sweeping the label 8 using the optical read-out means. A numeral 9F, which is a decimal representation of a binary numeral of the mark 9, may be entered in the vicinity of the mark 9 for facilitating visual identification of cassettes 7. Although the mark 9 and the numeral 9F are entered by the user, one of a plurality of labels 8 on which different kinds of marks 9 and numerals 9F are printed in advance, may be selected and adhered to the rear surface 7a of the cassette 7. A so-called bar code or other like identification code may also be used for the marks 9.

At least a portion of the function of the integers 1 to 6 may be implemented by software techniques in the CPU system 10. For example, a portion of the above data may be obtained from a timer function section of the usual programme recording. Thus, the programme start (recording start) time and programme finish time as set by the customary image recording appointment operation may be automatically transmitted on the occasion of the image recording of the programme to the search data memory 11 for storage therein.

Various search data stored in the memory 11 are displayed on a display section 20 by a key actuation at the key input section 1.

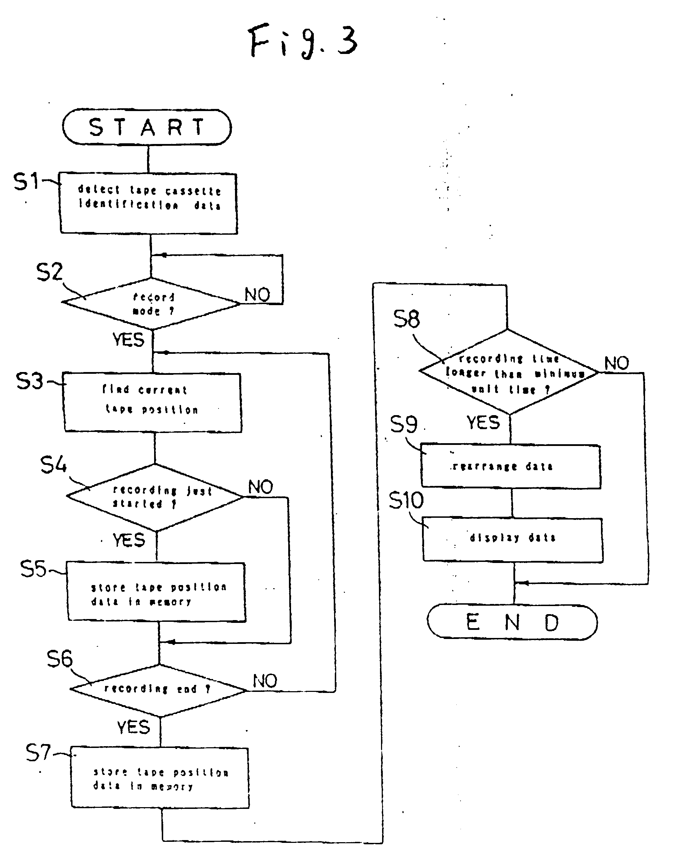

Tape position data storage and various data display operations on the occasion of the image recording in the above-described VTR will be explained by reference to Figure 3. When the cassette 7 is loaded into the VTR at step S1 in Figure 3, identification data of the cassette 7, such as the mark 9 shown in Figure 2, are read and detected by the cassette identification section 6.

The program then proceeds to step S2, where it is determined if the VTR is in the image recording mode. If the result of this step is NO, the program reverts to step S2 and if the result of this step is YES, the program proceeds to step S3. In step S3, the current tape position data are found at the tape position detection section 5 on the basis of the above-described reel rotation or other like data.

In the next step S4, it is determined whether the image recording has just been started. If the result of this step is YES, the current position data at this time are stored in the memory 11 during the next step S5. The program then proceeds to step S5. If the result is NO, the program proceeds to step S6. In the step S6, it is determined whether the recording has terminated. If the result is NO, the program reverts to step S3. If the result is YES, the program proceeds to step S7 where the current tape position data are stored in the memory 11.

Thus, the steps S3 to S7 are performed in such manner that the current tape position is continually computed during the image recording operation. Only the tape position data at the image recording start time and at the image recording end time are stored in the memory 11.

In the next step S8, it is determined whether the recording time is longer than a predetermined minimum unit time interval. If the result is YES, the data rearrangement is performed at the next step S9. In the next step S10, the data display is performed on the display section 20 to terminate the operation. In this manner, image recording time intervals shorter than the minimum unit time interval are disregarded.

In the data rearrangement step S9, the search data which has been disturbed by recording another new programme onto a previously recorded programme is rearranged into order. After such data rearrangement, the data of each programme stored in the memory 11 is in keeping with the sequence from the tape start position. By using the memory 11, data rewriting at the time of the re-recording may be facilitated.

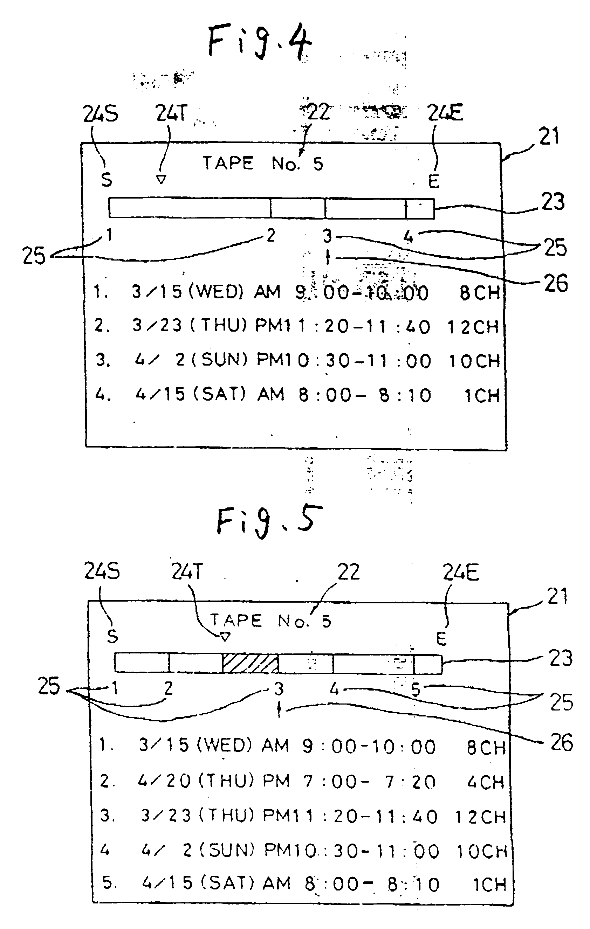

The display section 20 on which various search data are displayed in step S10 may be a phosphor display tube or a liquid crystal device provided on the front panel of the VTR. However, for a more detailed and clearer visual display, a cathode ray tune (CRT) for television receiver may also be employed for a so-called "on screen" display. A more specific display of the search data by the CRT will now be explained with reference to Figure 4.

In Figure 4 is shown a display screen 21 of the television receiver connected to the VTR. On the display screen 21, cassette identification data in the form of an identification number 22 is displayed at the centre top position, and a bar graph 23 indicating the recording state on the tape is displayed thereunder. An S mark 24S indicates the start of the tape and an E mark 24E indicates the end of the tape, and a triangular arrow 24T indicates the current tape position. These indicators are arranged directly above the bar graph 23. A numeral 25 indicating the sequence number from the start of the tape of the recorded programme, and an arrow 26 for locating or searching are arranged directly below the bar graph 23.

Below the bar graph display zone, data concerning the recorded programmes are displayed in the form of a table in the programme sequence. More specifically, the programme number, recording data, day of the week, the recording start time, the recording finish time, and the channel are each indicated in one row per recorded programme. It is also contemplated for the arrow 26 optionally to be set by designating a programme number, for example, by actuating a key in the key input section 1 of Figure 1. By switching to an automatic locating mode, for example, the programme of the designated programme number can be automatically searched to reproduce the programme from its beginning.

In the specific example shown in Figure 4, it is easily seen from the bar graph 23 that four separate programmes with programme numbers 1 to 4 are sequentially recorded from the starting point of the tape, and that the recording time intervals of these programmes are, respectively, 1 hour, 20 minutes, 30 minutes and 10 minutes in the order of the programme numbers. The recording data, day of the week, recording start time, recording finish time and channel for each of the programmes is clearly seen from the table in the lower half of the display screen 21.

Although not shown, it is also contemplated to provide an indication of programme genres, such as a distinction between films, sports, news, music or drama, or the users own memoranda concerning the programme, which may be entered from the key input section 1 so as to be stored in the memory 11. The mark indicating that the recorded programme has been reproduced and viewed (the reproduced mark) is also entered by the key input section 1 or displayed automatically in association with the above table or bar graph.

The change in the display state of the search data which is caused by image recording is started from the current tape position of Figure 4. Recording of new material is begun at the 20-minute position from the beginning of the tape as shown in Figure 4, and terminated after 20 minutes as explained by reference to Figure 5. In Figure 5, the programme material of programme number 1 is erased from a mid-position by the newly recorded programme. However, the beginning portion of the programme 1 remains unerased and can be located. Hence, the data concerning the programme is left as programme number 1. Since the newly recorded programme is placed at the second position from the start of the tape, the data concerning the programme are stored as programme number 2 in the memory 11. The numbers for the programmes having programme numbers 2, 3 and 4 in Figure 4 are incremented by one and thus become 3, 4 and 5, respectively. In the tape zone from the end position of the recorded region of the programme number 2 to the beginning position of the recorded region of the programme number 3, which is illustrated as a hatched portion of the bar graph 23 in the drawing, the contents of the programme portion 1 from 40 to 60 minutes of programme number "1" are recorded. However, since this programme portion cannot be located, it is not identified in the search data. Although not shown, when the new programme is recorded over recorded regions of a plurality of programmes, the programme number of the later positions becomes progressively smaller. The rearrangement of the programme data sequence is performed in the step 9 as described above.

It will be appreciated from the foregoing that the laborious operation of entering data on labels may be dispensed with. The data rewriting on the occasion of re-recording may also be performed easily and automatically for cassettes on which re-recording is performed repeatedly. Since data may be rewritten automatically by transferring data from the sections 2 to 6 to the memory 11 of the CPU system 10 during image recording, the data entry operation with the aid of the key input section 1 may be dispensed with. Meanwhile, in time recording, search data are stored automatically merely by transferring various data for timer setting operations, such as the day of the week, the recording start time, the recording end time and the channel, to the memory 11 at the time of the actual recording. The search data stored in the memory are displayed on, for example, the CRT screen of the television receiver so that the user can easily see which channel programme is recorded for how long in which portions of which tape cassettes.

Although described in conjunction with a video cassette and recorder, the invention is of course applicable to other cassette formats, such as audio cassette tapes and each of the various video cassette formats.

## Claims

1. Apparatus for recording video signals corresponding to a plurality of programmes onto a magnetic tape of tape cassette (7) having cassette identity information (9) thereon, the apparatus comprising:
recording means for recording the video signals on the magnetic tape of the tape cassette (7);
cassette identification means (6) for detecting the cassette identity information (9) from the cassette (7);
a memory (11) for storing the cassette identity information and programme identification information relating to programmes recorded on the cassette, the programme identification information comprising at least position information indicating the position of the programme on the magnetic tape and further information relating to the programme;
display means (20) for displaying the cassette identity information and the programme identification information; and
control means (10) for controlling the recording means, the cassette identification means (6), the memory (11) and the display means (20), the control means (10) being arranged to supply said programme identification information to the memory (11) on recording of a programme for subsequent display with the cassette identity information by the display means (20).

2. Apparatus as claimed in claim 1, including means (2, 3, 4, 5) for generating said programme identification information on recording of a programme on the magnetic tape of the tape cassette (7).

3. Apparatus as claimed in claim 1 or claim 2, wherein the control means (10) is arranged to update the programme identification data stored in the memory (11) when a new programme is recorded over a previously recorded programme on the magnetic tape of the tape cassette (7).

4. Apparatus as claimed in claim 3, wherein the control means (10) is arranged to update the programme identification information only if the duration of the new programme exceeds a predetermined minimum time interval.

5. Apparatus as claimed in any preceding claim. wherein said further information relating to a programme comprises the date and time of recording of the programme.

6. Apparatus as claimed in any preceding claim, wherein said further information relating to a programme comprises the channel from which the programme was recorded.

7. Apparatus as claimed in any preceding claim, wherein the control means (10) is arranged to control the display means (20) to display a bar graph (23) indicating the position on the magnetic tape of programmes recorded on the tape cassette (7).

8. Apparatus as claimed in any one of the preceding claims, including a tape cassette (7) having means (8) thereon for carrying said cassette identity information (9).

## Patentansprüche

1. Vorrichtung zur Aufzeichnung von Videosignalen entsprechend einer Vielzahl von Programmen auf einem Magnetband einer Bandkassette (7), auf der eine Kassettenidentitätsinformation (9) vorhanden ist, wobei die Vorrichtung aufweist:
eine Aufzeichnungseinrichtung zur Aufzeichnung der Videosignale auf dem Magnetband der Bandkassette (7);
eine Kassettenidentifikationseinrichtung (6) zur Ermittlung der Kassettenidentitätsinformation (9) der Kassette (7);
einen Speicher (11) zur Speicherung der Kassettenidentitätsinformation und der Programmidentifikationsformation bezüglich der Programme, die auf der Kassette aufgezeichnet sind, wobei die Programmidentifikationsinformation zumindest eine Positionsinformation aufweist, die die Position des Programms auf dem Magnetband und weiter eine Information bezüglich des Programms anzeigt;
eine Anzeigeeinrichtung (20) zum Anzeigen der Kassettenidentitätsinformation und der Programmidentifikationsinformation; und
eine Steuereinrichtung (10) zum Steuern der Aufzeichnungseinrichtung, der Kassettenidentifikationseinrichtung (6), des Speichers (11) und der Anzeigeeinrichtung (20), wobei die Steuereinrichtung (10) eingerichtet ist, die Programmidentifikationsinformation beim Aufzeichnen eines Programms mit der Kassettenidentitätsinformation zwecks einer anschließenden Anzeige durch die Anzeigeeinrichtung (20) zum Speicher (11) zu liefern.

2. Vorrichtung nach Anspruch 1, die eine Einrichtung (2, 3, 4, 5) zum Erzeugen der Programmidentifikationsinformation beim Aufzeichnen eines Programms auf dem Magnetband der Bandkassette (7) aufweist.

3. Vorrichtung nach Anspruch 1 oder 2, wobei die Steuereinrichtung (10) eingerichtet ist, die Programmidentifikationsdaten, die im Speicher (11) gespeichert sind, zu aktualisieren, wenn ein neues Programm über einem vorher aufgezeichneten Programm auf dem Magnetband der Bandkassette (7) aufgezeichnet wird.

4. Vorrichtung nach Anspruch 3, wobei die Steuereinrichtung (10) so eingerichtet ist, daß sie die Programmidentifikationsinformation nur dann aktualisiert, wenn die Dauer des neuen Programms ein vorgegebenes minimales Zeitintervall übersteigt.

5. Vorrichtung nach einem vorhergehenden Anspruch, wobei die weitere Information bezüglich eines Programms das Datum und die Zeit der Aufzeichnung des Programms umfaßt.

6. Vorrichtung nach einem vorhergehenden Anspruch, wobei die weitere Information bezüglich eines Programms den Kanal umfaßt, von dem das Programm aufgezeichnet wurde.

7. Vorrichtung nach einem vorhergehenden Anspruch, wobei die Steuereinrichtung (10) eingerichtet ist, die Anzeigeeinrichtung zu steuern, um ein Strichdiagramm (23) anzuzeigen, das die Position auf dem Magnetband der Programme anzeigt, die auf der Bandkassette (7) aufgezeichnet sind.

8. Vorrichtung nach einem der vorhergehenden Ansprüche, die eine Bandkassette (7) aufweist, auf der eine Einrichtung (8) zum Tragen der Kassettenidentitätsinformation (9) angeordnet ist.

## Revendications

1. Appareil pour enregistrer des signaux vidéo correspondant à une pluralité de programmes sur la bande magnétique d'une cassette à bande magnétique (7) ayant des informations d'identité de cassette (9) sur celle-ci, l'appareil comprenant:
- des moyens d'enregistrement pour enregistrer les signaux vidéo sur la bande magnétique de la cassette à bande magnétique (7);
- des moyens d'identification de cassette (6) pour détecter les informations d'identité de cassette (9) à partir de la cassette (7);
- une mémoire (11) pour mémoriser les informations d'identité de cassette et des informations d'identification de programme relatives à des programmes enregistrés sur la cassette, les informations d'identification de programme comprenant au moins des informations de position indiquant la position du programme sur la bande magnétique et d'autres informations relative au programme;
- des moyens d'affichage (20) pour afficher les informations d'identité de cassette et les informations d'identification de programme; et
- des moyens de commande (10) pour comander les moyens d'enregistrement, les moyens d'identification de cassette (6), la mémoire (11) et les moyens d'affichage (20), les moyens de commande (10) étant agencés pour fournir lesdites informations d'identification de programme à la mémoire (11) lors de l'enregistrement d'un programme pour reproduction ultérieure avec les informations d'identité de cassette par les moyens d'affichage (20).

2. Appareil selon la revendication 1, comportant des moyens (2, 3, 4, 5) pour produire lesdites informations d'identification de programme lors de l'enregistrement d'un programme sur la bande magnétique de la cassette à bande magnétique (7).

3. Appareil selon la revendication 1 ou 2, dans lequel les moyens de commande (10) sont agencés pour mettre à jour les informations d'identification de programme dans la mémoire (11) lorsqu'un nouveau programme est enregistré sur un programme précédemment enregistré sur la bande magnétique de la cassette à bande magnétique (7).

4. Appareil selon la revendication 3, dans lequel les moyens de commande (10) sont agencés pour mettre à jour les informations d'identification de programme uniquement si la durée du nouveau programme dépasse un intervalle de temps minimal prédéterminé.

5. Appareil selon l'une quelconque des revendications précédentes, dans lequel lesdites autres informations relatives à un programme comprennent la date et l'heure d'enregistrement du programme.

6. Appareil selon l'une quelconque des revendications précédentes, dans lequel lesdites autres informations relatives à un programme comprennent le canal de l'émission à partir duquel le programme a été enregistré.

7. Appareil selon l'une quelconque des revendications précédentes, dans lequel les moyens de commande (10) sont agencés pour commander les moyens d'affichage (20) pour afficher une barre d'affichage (23) indiquant la position, sur la bande magnétique, des programmes enregistrés sur la cassette à bande magnétique (7).

8. Appareil selon l'une quelconque des revendications précédentes, comportant une cassette à bande magnétique (7) ayant des moyens (8) sur celle-ci pour porter lesdites informations d'identité de cassette (9).
